# NOUVEAU FASCICULE DE BREVET EUROPEEN

(11) **EP 0 645 903 B2**
(45) Date de publication et mention de la décision concernant l'opposition: **09.02.2005**
(45) Mention de la délivrance du brevet: 11.11.1998
(21) Numéro de dépôt: 94402160.9
(22) Date de dépôt: 28.09.1994
(51) Int. Cl.: H04B 7/26

(54) **Structure de burst de remplissage dans un système cellulaire de radiocommunications numériques utilisant le principe de l'AMRT, et station de base pour l'élaboration d'une telle structure**
Burstfüllstruktur in einer digitalen TDMA zellularen Funkanordnung, und Basisstation, die diese Struktur aufbaut
Filling burst structure in a digital TDMA cellular radiocommunication system, and base station for the elaboration of this structure

(30) Priorité: 29.09.1993 FR 9311572
(43) Date de publication de la demande: 29.03.1995
(73) Titulaire: ALCATEL, 75008 Paris (FR)
(72) Inventeur: Delprat, Marc, F-78150 Le Chesnay (FR); Gourgue, Frederic, F-75017 Paris (FR); Pequet, Eric, B6120 Jamioulx (BE)
(74) Mandataire: Knecht, Ulrich Karl, Dipl.-Ing.

(56) Documents cités:
- EP-A- 0 540 808
- WO-A-91/00660
- DE-A- 3 130 176
- GB-A- 2 232 562
- GB-A- 2 260 877
- JP-A- 1 188 137
- US-A- 3 995 119
- US-A- 5 150 362
- GSM Specification 5.02
- MPT 1327 "A Signalling Standard for Trunked Private Land Mobile Radio Systems"
- ETSI/GSM 05.02/1
- M.Mouly, M.B.Pautet: "The GSM System for Mobile Communications", 1992
- TETRA document 05.02 Version 1.1.1
- MIRS RF Interface Specification, Version D02.00.00
- Input Paper RES6.2(92) 183 ETSI

## Description

La présente invention concerne une structure de burst de remplissage dans un système cellulaire de radiocommunications numériques utilisant le principe de l'Accès Multiple à Répartition dans le Temps (AMRT, ou TDMA en anglais). Elle concerne également une station de base de ce système pour l'élaboration d'une telle structure de burst.

Dans les systèmes cellulaires de radiocommunications numériques, chaque cellule, couvrant une zone géographique donnée, est munie d'une station émettrice/réceptrice de base (appelée simplement station de base) servant d'interface entre une station mobile se trouvant sensiblement à l'intérieur de la zone géographique qu'elle couvre et soit le réseau de gestion du système de radiocommunications, soit une autre station mobile.

A chaque station de base est associée au moins une fréquence de transmission dans le sens descendant (station de base vers mobile) ; une fréquence de transmission correspondante dans le sens montant correspond à cette fréquence descendante. Dans tout ce qui suit, on emploiera simplement l'expression "fréquence de transmission" pour désigner une fréquence de transmission descendante. On ne parlera plus des fréquences de transmission montantes, tout en sachant qu'il en existe une par fréquence de transmission descendante.

Dans les systèmes utilisant le principe de l'AMRT, chaque fréquence de transmission est subdivisée en trames répétées suivant un motif périodique. Chaque trame est elle-même subdivisée en intervalles de temps, un intervalle de temps de rang donné répété périodiquement constituant un canal de transmission.

Parmi les canaux de transmission, on trouve au moins un canal de signalisation ou voie balise, sur lequel sont transmis les messages de signalisation, et des canaux de trafic, pour la transmission des données utiles (de parole ou autres). En général, le canal de signalisation correspond au premier intervalle de temps de chaque trame sur une fréquence de transmission particulière dénommée fréquence balise. La fréquence balise est caractéristique de la cellule. Le rang du premier intervalle de temps est repéré par exemple par le numéro 0 dans les systèmes conformes à la norme GSM, et par le numéro 1 dans les systèmes conformes à la future norme TETRA.

Le canal de signalisation est lui-même constitué de plusieurs sous-canaux, chaque sous-canal étant également répété suivant un motif périodique qui lui est propre.

Sur la fréquence balise peuvent donc être transmis à la fois des messages de signalisation et des données utiles. Lorsque le trafic de communications dans la cellule est très important, plusieurs autres fréquences de transmission peuvent être utilisées pour suffire aux besoins, c'est-à-dire pour assurer la transmission des données utiles.

Dans certains systèmes, comme par exemple les systèmes conformes à la future norme TETRA, il existe une fréquence balise principale et une fréquence balise auxiliaire, destinée à assurer la transmission des messages de signalisation lorsque le trafic est tel que la fréquence balise principale ne suffit plus, et/ou lorsque, pour des raisons de sécurité, l'on ne souhaite pas transmettre tous les messages de signalisation sur la même fréquence.

Les messages de signalisation ou les données utiles sont transmis sur les canaux adaptés sous forme de paquets ou bursts.

Lorsqu'une station mobile, initialement en mode veille, cherche à se connecter au réseau de gestion du système de radiocommunications, elle doit déterminer la fréquence balise de la cellule dans laquelle elle se trouve puis, du fait de l'utilisation de l'AMRT, se synchroniser avec la station de base de cette cellule pour utiliser ensuite le canal correct, c'est-à-dire l'intervalle de temps correct.

De même, une station mobile se trouvant dans une cellule donnée doit "écouter", lorsqu'elle est inactive en émission et en réception et éventuellement si le signal reçu de la station de base de la cellule dans laquelle elle se trouve n'a pas une puissance ou un taux d'erreur par bit (TEB) suffisants, les fréquences balises des cellules voisines pour mesurer la puissance (ou le TEB) du signal reçu sur ces fréquences . Elle doit en outre se synchroniser avec les cellules voisines, afin de préparer un éventuel transfert intercellulaire (handover en anglais) vers la cellule dont la fréquence balise est reçue par exemple avec un niveau de puissance plus élevé que le niveau de puissance de la fréquence balise de la cellule dans laquelle elle se trouve.

Pour cela, il est essentiel que la station de base émette en permanence sur la fréquence balise.

Cela ne pose pas de problème lorsque le canal de signalisation et tous les canaux de trafic portés par la fréquence balise sont utilisés.

En revanche, il peut arriver, par exemple lorsque le trafic en communications est peu important, que certains canaux de trafic ne soient pas utilisés, ou même qu'à certains moments, le canal de signalisation ne soit pas utilisé à 100% de sa capacité, de sorte que certains intervalles de temps sur ce canal sont inutilisés. Dans ces cas, il est prévu d'émettre des bursts dits de remplissage. La structure de ces bursts est prédéterminée et telle qu'ils ne peuvent être confondus avec des bursts de signalisation, de sorte que la station mobile sait en les entendant qu'il ne s'agit pas de bursts de signalisation.

Ces bursts de remplissage sont émis par la station de base, sous la commande du réseau, dès qu'un canal ou qu'un intervalle de temps d'un canal (sous-canal) est inutilisé sur la fréquence balise principale ou, le cas échéant, auxiliaire.

Pour se synchroniser avec la station de base d'une cellule déterminée, une fois la fréquence balise de cette cellule identifiée, la station mobile doit rechercher un burst dit de synchronisation.

Le burst de synchronisation est transmis suivant un motif de répétition périodique sur un sous-canal de la voie balise. Dans un système conforme à la norme GSM, la période de transmission du burst de synchronisation est de 0,04s environ ; dans un système conforme à la future norme TETRA, la période de transmission du burst de synchronisation est de 1s environ.

La station mobile cherchant à se synchroniser "écoute" donc à certains instants, en fonction du mode de fonctionnement selon lequel elle a été programmée, ce qui est transmis sur la fréquence balise. Pendant toute cette période dite d'acquisition de synchronisation, elle ne peut ni émettre, ni recevoir de données de signalisation ou de données utiles à destination ou en provenance de la nouvelle cellule.

Lors d'une procédure d'accès, la durée nécessaire à la synchronisation peut donc être importante. Lors d'une procédure de rétablissement de communication (par exemple une procédure de handover dans les systèmes conformes à la norme GSM), la communication en cours peut être interrompue tant que la synchronisation n'est pas acquise, la durée d'acquisition de la synchronisation pouvant être supérieure à 20s (dans le cas de la future norme TETRA).

Ces deux situations sont bien entendu tout à fait préjudiciables.

Le but de la présente invention est de réduire la durée nécessaire à la synchronisation d'une station mobile.

La présente invention propose à cet effet une structure de burst de remplissage utilisée dans un système cellulaire de radiocommunications numériques fonctionnant selon le principe de l'Accès Multiple à Répartition dans le Temps selon la revendication 1.

L'invention permet ainsi de répéter plus souvent les informations contenues dans le sous-canal de synchronisation. De cette manière, dans tous les cas où des bursts de remplissage sont nécessaires, les stations mobiles peuvent se synchroniser plus rapidement que dans l'art antérieur.

Le message de signalisation contenu dans le burst de remplissage peut ainsi contenir des informations de synchronisation à destination des stations mobiles se trouvant dans ou au voisinage d'une cellule à laquelle est associée la fréquence balise sur laquelle il est émis, ou bien à la fois des informations de synchronisation à destination des stations mobiles se trouvant dans ou au voisinage d'une cellule à laquelle est associée la fréquence balise sur laquelle il est émis et d'autres informations de signalisation.

De manière avantageuse, les informations de synchronisation contenues dans le burst de remplissage comportent une séquence dite d'apprentissage reconnaissable par la ou les stations mobiles auxquelles elles sont destinées.

Lorsque le système utilise pour la transmission des messages de signalisation, outre la fréquence balise précédente, dite fréquence balise principale, une fréquence balise auxiliaire, les bursts de remplissage sur la fréquence balise auxiliaire ont la même structure que les bursts de remplissage utilisés sur la fréquence balise principale.

La présente invention propose selon la revendication 7 un procédé de transmission de messages de signalisation. Les messages de signalisation émis sur la voie balise comportent à destination des stations mobiles déjà synchronisées une information leur indiquant que les bursts de remplissage émis sur les canaux de la fréquence balise qui ne sont pas alloués à la transmission de données utiles ou sur les intervalles de temps du canal de signalisation inutilisés pour la transmission de messages de signalisation contiennent des données de signalisation à acquérir.

La présente invention propose selon la rev. 8 un procédé d'allocation de canal de trafic. Il consiste, lorsque des fréquences autres que la fréquence balise sont disponibles pour le trafic, à allouer en premier lieu des canaux de trafic sur ces fréquences, de manière à laisser les canaux de trafic de la fréquence balise libres pour l'émission de bursts de remplissage selon l'invention.

La présente invention concerne également une station de base d'un système cellulaire de radiocommunications numériques fonctionnant selon le principe de l'Accès Multiple à Répartition dans le Temps, selon la revendication 9 comportant des moyens d'émission et de réception et un moyen de pilotage, et telle que, en réponse à un ordre reçu de moyens de gestion des ressources radio du système indiquant lesquels des canaux de trafic de la fréquence balise sont inutilisés pour transmettre des données utiles et lesquels des intervalles de temps du canal de signalisation sont inutilisés pour transmettre des messages de signalisation, le moyen de pilotage commande des moyens d'élaboration de bursts ayant une structure selon l'invention, ces bursts étant émis par les moyens d'émission/réception pendant les intervalles de temps correspondant aux canaux de la fréquence balise qui ne sont pas alloués à la transmission de données utiles ou aux intervalles de temps du canal de signalisation inutilisés pour la transmission de messages de signalisation.

Le moyen de pilotage peut être programmé de sorte qu'il commande l'émission de bursts de remplissage dont le contenu est fonction des canaux non alloués pour la transmission de données utiles ou des intervalles de temps du canal de signalisation inutilisés.

Par ailleurs, il peut commander l'émission par les moyens d'émission/réception, sur la voie balise, de messages de signalisation comportant une information indiquant aux stations mobiles déjà synchronisées quels canaux de trafic sont utilisés pour transmettre les bursts de remplissage susceptibles de contenir également de la signalisation.

L'invention concerne enfin un organe de gestion des ressources radio du système de radiocommunications selon la revendication 12.

D'autres caractéristiques et avantages de la présente invention apparaîtront dans la description suivante d'un mode de mise en oeuvre de la présente invention, donnée à titre illustratif et nullement limitatif.

Dans les figures suivantes :
- la figure 1A représente une structure simple de trame utilisée dans un système cellulaire de radiocommunicatⁱons numériques classique,
- la figure 1B représente une structure simple de trame utilisée dans un système cellulaire de radiocommunications numériques employant des bursts de remplissage ayant la structure de l'invention,
- la figure 2 représente de manière schématique deux cellules d'un système cellulaire de radiocommunications numériques,
- la figure 3 représente de manière schématique les éléments d'une station émettrice/réceptrice de base intervenant dans la mise en oeuvre de la présente l'invention.

Dans toutes ces figures, les éléments communs portent les mêmes numéros de référence.

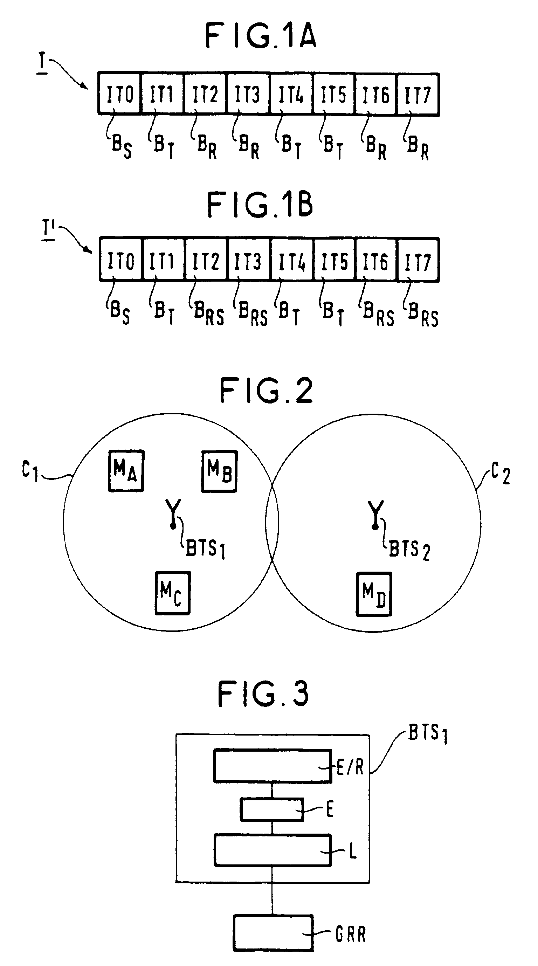

On voit en figure 1A une structure de trame T portée par la fréquence balise d'une cellule C₁ (voir figure 2) d'un système cellulaire de radiocommunications numériques. La structure de la trame T a été décrite en partie dans le préambule.

Dans les systèmes conformes à la norme GSM, la trame T est subdivisée en huit intervalles de temps. Chaque intervalle de temps IT0 à IT7 a la durée d'un ou de plusieurs bursts, selon le type de burst qu'il véhicule.

Comme on l'a déjà expliqué, l'intervalle de temps de rang 0 (IT0) sert à transmettre les messages de signalisation constitués d'un ou plusieurs bursts de signalisation B_{S}.

Les sept autres intervalles de temps IT1 à IT7 sont réservés à la transmission de données utiles. Chaque intervalle de temps, IT1 à IT7 constitue ainsi un canal de trafic, destiné à être alloué à une station mobile lorsque cette derniére doit établir une communication.

Dans l'exemple représenté en figure 2, trois stations mobiles M_{A}, M_{B} et M_{C} se trouvent en cours de communication sous la couverture de la station de base BTS₁ de la cellule C₁. Les canaux correspondant respectivement aux intervalles de temps IT1, IT4 et IT5 leur ont été alloués. Des données utiles sous la forme de bursts normaux de trafic B_{T} sont donc transmises pendant ces intervalles de temps.

Comme aucun autre mobile n'est en cours de communication sous la couverture de BTS₁, les intervalles de temps IT2, IT3, IT6 et IT7 ne sont pas utilisés pour la transmission de données utiles. De manière classique dans l'art antérieur, ils sont occupés par des bursts de remplissage B_{R}, ces bursts ayant une structure telle qu'ils ne contiennent aucune information à destination des stations mobiles, et ne peuvent être confondus par elles avec aucun autre type de burst.

Selon l'invention, au lieu d'occuper les intervalles de temps IT2, IT3, IT6 et IT7 avec des bursts de remplissage ayant la structure qui vient d'être indiquée, on utilise des bursts de remplissage contenant des informations de signalisation.

De manière classique, les bursts de signalisation présentent :
- soit la structure des bursts dits normaux, c'est-à-dire qu'ils ont une structure identique à celle des bursts contenant des données utiles et sont distingués de ces derniers par une station mobile, une fois que cette dernière est synchronisée avec la station de base de la cellule dans laquelle elle se trouve par le fait qu'ils sont transmis sur la voie balise et qu'ils contiennent une adresse de destinataire leur correspondant ou non,
- soit une structure particulière différente de celle des bursts normaux, comme par exemple la structure des bursts de synchronisation ou des bursts de correction de fréquence dans les systèmes conformes à la norme GSM; les bursts de synchronisation comportent notamment une séquence dite d'apprentissage caractéristique et distincte (en particulier plus longue) de celle utilisée dans les bursts normaux, de sorte qu'une station mobile non synchronisée avec la station de base et "écoutant" à certains instants tout ce qui est transmis sur un canal de signalisation est capable d'identifier un burst de synchronisation.

On voit en figure 1B la structure de la trame T modifiée pour donner une structure T' dans laquelle les intervalles de temps IT2, IT3, IT6 et IT7 contiennent des bursts de remplissage modifiés pour contenir des informations de signalisation. Ces bursts de remplissage selon l'invention sont notés B_{RS}.

Ainsi, si une station mobile M_{D} se trouvant sous la couverture de la station de base BTS₂ d'une cellule C₂ voisine de la cellule C₁ doit se synchroniser avec la station de base BTS₁ après en avoir identifié la fréquence balise, et si elle n'a pas repéré le premier burst B_{S} porté par l'intervalle de temps IT0, il n'est pas nécessaire qu'elle attende pendant 0,04s (norme GSM) l'intervalle IT0 suivant (dans un système conforme à la norme TETRA, on rappelle que le canal de signalisation porte le numéro de rang 1 et que le burst de synchronisation est répété classiquement environ toutes les secondes).

En effet, selon l'invention, on répète pendant les intervalles de temps IT2, IT3, IT6 et/ou IT7 le burst de synchronisation, de sorte que la station mobile M_{D} n'ayant pas repéré le burst de synchronisation transmis dans l'intervalle de temps IT0 peut repérer celui transmis sur un autre intervalle de temps avant le prochain intervalle de temps de rang 0.

On réduit ainsi de manière significative la durée nécessaire à la synchronisation. De cette manière, dans un système conforme à la norme TETRA, lors de l'accès d'une station mobile à une cellule donnée (par exemple l'accès de la station mobile M_{D} à la cellule C₁), le temps pendant lequel les données utiles ne sont pas transmises, c'est-à-dire le temps nécessaire à la synchronisation, passe de 20s à moins de 0,5s.

De même, lors d'un handover de la station mobile M_{D} (par exemple de la cellule C₂ à la cellule C₁), le temps nécessaire à l'acquisition de la synchronisation est réduit, de sorte que les risques de coupure de la communication en cours sont moindres.

De plus, l'invention permet soit de réduire les périodes pendant lesquelles une écoute ("monitoring") des fréquences balises des cellules adjacentes est nécessaire, ce qui permet de diminuer la consommation du mobile, soit d'écouter plus de cellules adjacentes.

Bien évidemment, selon l'invention, la structure des bursts de remplissage peut varier.

Ainsi, on peut par exemple choisir, comme cela vient d'être décrit, une structure telle que chaque burst de remplissage contient un burst de synchronisation que la station mobile est capable de repérer aisément grâce à sa séquence d'apprentissage particulière.

Dans un système conforme à la future norme TETRA, le burst de synchronisation (BSCH) a une durée égale à la moitié de celle de l'intervalle de temps alloué, de sorte que l'on peut associer au burst de synchronisation, dans le burst de remplissage selon l'invention, un autre burst de signalisation, comme par exemple un burst d'information sur le type de réseau auquel appartient la cellule concernée (BNCH). De cette manière, pendant la période de recherche de synchronisation, la station mobile ayant repéré le burst de synchronisation du fait de sa séquence d'apprentissage particulière peut disposer en outre de certaines autres informations de signalisation.

On peut ainsi décider que chaque burst de remplissage contient un burst de synchronisation du type BSCH et un burst de signalisation distinct ; par exemple, le premier burst de remplissage disponible contient un burst de synchronisation et un burst d'information sur le type de réseau (BNCH), le second un burst de synchronisation et un burst de signalisation destiné à une station mobile particulière, le troisième un burst de synchronisation et un burst de signalisation destiné à un groupe de stations mobiles, etc...

Si l'on souhaite utiliser les bursts de remplissage ayant la structure de l'invention pour transmettre des messages de signalisation à des stations mobiles déjà synchronisées, il est nécessaire d'indiquer aux stations mobiles qu'elles doivent "écouter" les intervalles de temps correspondants.

Pour cela, selon un mode de mise en oeuvre conforme à la présente invention, dans les messages de signalisation communs transmis sur la voie balise, on utilise des bits d'information indiquant aux stations mobiles déjà synchronisées les rangs des intervalles de temps à écouter pour trouver des messages de signalisation supplémentaires. De tels messages de signalisation peuvent être élaborés par la station de base.

On gère ainsi de manière dynamique la transmission des messages de signalisation, et l'on assure donc une meilleure utilisation des ressources.

D'autre part, selon la norme TETRA, il peut exister, outre la fréquence balise mentionnée précédemment et dénommée fréquence balise principale, une ou plusieurs fréquences balises dites auxiliaires. Il est bien entendu que, dans tous les cas où il existe plusieurs fréquences balises sur lesquelles il est obligatoire d'émettre en permanence, l'invention s'applique de la même manière à chacune d'entre elles.

Afin d'optimiser la durée de la synchronisation des stations mobiles lorsqu'une cellule utilise une fréquence balise et une ou plusieurs fréquences de trafic supplémentaires, il est en outre possible, selon l'invention, d'allouer en premier lieu des canaux de trafic sur les fréquences de trafic autres que la fréquence balise, afin de réserver autant que possible les intervalles de temps libres sur cette dernière à la transmission de bursts de remplissage selon l'invention.

Une station de base, telle que par exemple la station de base BTS₁, adaptée pour la mise en oeuvre de l'invention, est telle qu'elle comporte notamment (voir figure 3) :
- un émetteur/récepteur E/R apte à émettre, pendant les intervalles de temps correspondant à des canaux de trafic de la fréquence balise qui ne sont pas alloués à la transmission de données utiles ou aux intervalles de temps du canal de signalisation inutilisés pour la transmission de messages de signalisation, des bursts de remplissage ayant la structure de l'invention,
- un moyen de pilotage L pour commander des moyens E d'élaboration de bursts de remplissage ayant une structure conforme à celle de l'invention.

Le moyen de pilotage L est commandé par un organe GRR de gestion des ressources radio, situé par exemple au niveau de la BTS (mais pouvant également se trouver au niveau du réseau, selon l'architecture choisie), cet organe indiquant à la station de base les rangs des canaux de trafic de la fréquence balise qui ne sont pas alloués à la transmission de données utiles, ou ceux des intervalles de temps du canal de signalisation inutilisés pour la transmission de messages de signalisation, c'est-à-dire les intervalles de temps sur lesquels il est nécessaire d'émettre des bursts de remplissage. Le moyen de pilotage L de la station de base est modifié selon l'invention pour que cette dernière émette pendant ces intervalles de temps non pas des bursts de remplissage classiques, mais des bursts de remplissage selon l'invention.

L'algorithme programmé au sein du moyen de pilotage L peut comporter en outre, le cas échéant, des indications sur le type de bursts de remplissage à émettre, selon les intervalles de temps disponibles et selon les messages de signalisation que l'on a choisi de transmettre par l'intermédiaire des bursts de remplissage selon l'invention.

Enfin, le moyen de pilotage L de la station de base doit être modifié pour commander rémission sur le canal de signalisation de messages de signalisation indiquant aux stations mobiles déjà synchronisées les rangs des intervalles de temps autres que l'ITO qu'elles doivent écouter sur la fréquence balise pour obtenir d'autres informations de signalisation

Le ou les organes de gestion des ressources radio au niveau du réseau peuvent donc être également modifiés selon l'invention pour que :
- lorsque des fréquences de trafic supplémentaires sont utilisées, l'allocation de canaux de trafic soit effectuée en premier lieu sur ces fréquences de trafic,
- le cas échéant, lorsque des bursts de remplissage selon l'invention sont utilisés à destination des stations mobiles déjà synchronisées, indiquer à la station de base quels types de bursts de remplissage transmettre selon les intervalles de temps disponibles.

Bien entendu, l'invention n'est pas limitée au mode de mise en oeuvre qui vient d'être décrit.

En particulier, elle ne s'applique pas uniquement à des systèmes cellulaires répondant à la norme GSM. Elle peut ainsi notamment s'appliquer à des systèmes conformes à la future norme TETRA, selon laquelle les trames ne comportent que quatre intervalles de temps.

Enfin, on pourra remplacer tout moyen par un moyen équivalent sans sortir du cadre de l'invention.

## Revendications

1. Structure de burst de remplissage utilisée dans
un système cellulaire de radiocommunications numériques
fonctionnant selon le principe de l'Accès Multiple à Répartition dans le Temps (AMRT), chaque cellule de ce système étant associée à une fréquence balise subdivisée en trames (T') répétées périodiquement
et comprenant chacune au moins un canal de signalisation ou voie balise (ITO) pour la transmission d'un message de signalisation comprenant un burst de synchronisation (B_{S}) à destination de stations mobiles,
les autres canaux (IT1, ...IT7) étant destinés à la transmission de données utiles (B_{T}),
ledit burst de remplissage étant émis sur les canaux de ladite fréquence balise qui ne sont pas alloués à la transmission de données utiles, **caractérisée en ce que**
ledit burst de remplissage (B_{RS}) contient
ledit burst de synchronisation
qui est répété dans au moins un desdits autres canaux (IT2, IT3, IT6, IT7)
qui n'est pas alloué à la transmission de données utiles.

2. Structure de burst de remplissage selon la revendication 1
**caractérisée en ce que**
chaque burst de remplissage (B_{RS}) contient un burst de synchronisation qui est répétée dans chacun desdits autres canaux (IT2, IT3, IT6, IT7) qui n'est pas alloué à la transmission de données utiles.

3. Structure de burst de remplissage selon la revendication 1 ou 2 **caractérisée en ce que** ledit burst de synchronisation contient des informations de synchronisation à destination des stations mobiles se trouvant dans ou au voisinage d'une cellule à laquelle est associée la fréquence balise sur laquelle il est émis.

4. Structure de burst de remplissage selon l'une des revendications 1 à 2 **caractérisée en ce que** ledit burst de remplissage contient à la fois ledit burst de synchronisation à destination des stations mobiles se trouvant dans ou au voisinage d'une cellule à laquelle est associée la fréquence balise sur laquelle il est émis et d'autres informations de signalisation.

5. Structure de burst de remplissage selon l'une des revendications 3 ou 4 **caractérisée en ce que** ledit burst de synchronisation comportent une séquence dite d'apprentissage reconnaissable par la ou les stations mobiles auxquelles elles sont destinées.

6. Structure de burst de remplissage selon l'une des revendications 1 à 5 **caractérisée en ce que**, lorsque ledit système utilise pour la transmission desdits messages de signalisation, outre ladite fréquence balise, dite fréquence balise principale, une fréquence balise auxiliaire, les bursts de remplissage sur ladite fréquence balise auxiliaire ont la même structure que les bursts de remplissage utilisés sur ladite fréquence balise principale.

7. Procédé de transmission de messages de signalisation à destination d'une ou de plusieurs stations mobiles évoluant sous la couverture de cellules d'un système cellulaire de radiocommunications numériques fonctionnant selon le principe de l'Accès Multiple à Répartition dans le Temps et dans lequel chaque cellule de ce système étant associée à une fréquence balise subdivisée en trames répétées périodiquement et comprenant chacune au moins un canal de signalisation ou voie balise pour la transmission de messages de signalisation à destination de stations mobiles, les autres canaux étant destinés notamment à la transmission de données utiles,
**caractérisé en ce que** les messages de signalisation émis sur la voie balise comportent à destination de la ou des stations mobiles déjà synchronisées une information indiquant à ces dernières que les bursts de remplissage émis sur les canaux de ladite fréquence balise qui ne sont pas alloués à la transmission de données utiles contiennent des données de signalisation à acquérir et ont une structure selon l'une des revendications 1 à 6.

8. Procédé d'allocation d'un canal de trafic dans un système cellulaire de radiocommunications numériques fonctionnant selon le principe de l'Accès Multiple à Répartition dans le Temps (AMRT), chaque cellule de ce système étant associée à une fréquence balise subdivisée en trames répétées périodiquement et comprenant chacune au moins un canal de signalisation ou voie balise pour la transmission de messages de signalisation à destination de stations mobiles, les autres canaux, dits de trafic, étant destinés à la transmission de données utiles, un burst de remplissage étant émis sur les canaux de la fréquence balise qui ne sont pas alloués à la transmission de données utiles,
**caractérisé en ce qu'**il consiste, lorsque des fréquences autres que la fréquence balise sont disponibles pour le trafic, à allouer en premier lieu des canaux de trafic sur ces fréquences, de manière à laisser les canaux de trafic de la fréquence balise libres pour l'émission de bursts de remplissage selon l'une des revendications 1 à 6.

9. Station de base (BTS₁) d'un système cellulaire de radiocommunications numériques fonctionnant selon le principe de l'Accès Multiple à Répartition dans le Temps, comportant notamment des moyens d'émission et de réception (E/R) et un moyen de pilotage (L),
**caractérisée en ce que**, en réponse à un ordre reçu de moyens de gestion des ressources radio (GRR) dudit système indiquant lesquels des canaux de trafic de ladite fréquence balise sont inutilisés pour transmettre des données utiles et lesquels des intervalles de temps dudit canal de signalisation sont inutilisés pour transmettre des messages de signalisation, ledit moyen de pilotage (L) commande des moyens d'élaboration (E) de bursts ayant une structure selon l'une des revendications 1 à 6 ces bursts de remplissage étant émis par lesdits moyens d'émission/réception (E/R) pendant les intervalles de temps correspondant aux canaux de ladite fréquence balise qui ne sont pas alloués à la transmission de données utiles.

10. Station de base selon la revendication 9 **caractérisée en ce que** ledit moyen de pilotage est conçu pour commander l'émission de bursts de remplissage dont le contenu est fonction des canaux de trafic inutilisés pour la transmission de données utiles.

11. Station de base selon l'une des revendications 9 ou 10
**caractérisée en ce que** ledit moyen de pilotage est conçu pour commander l'émission par lesdits moyens d'émission/réception, sur ladite voie balise, de messages de signalisation comportant une information indiquant aux stations mobiles déjà synchronisées quels canaux de trafic sont utilisés pour transmettre lesdits bursts de remplissage susceptibles de contenir également des messages de signalisation.

12. Organe de gestion des ressources radio pour un système cellulaire de radiocommunications numériques fonctionnant selon le principe de l'Accès Multiple à Répartition dans le Temps (AMRT), système dans lequel chaque cellule est associée à une fréquence balise subdivisée en trames répétées périodiquement et comprenant chacune au moins un canal de signalisation ou voie balise pour la transmission de messages de signalisation à destination de stations mobiles, les autres canaux, dits de trafic, étant destinés à la transmission de données utiles, un burst de remplissage étant émis sur les canaux de la fréquence balise qui ne sont pas alloués à la transmission de données utiles,
**caractérisé en ce que** ledit organe de gestion des ressources radio comprend des moyens pour déterminer si des fréquences autres que la fréquence balise sont disponibles pour le trafic et pour allouer en premier lieu des canaux de trafic sur ces fréquences, de manière à laisser les canaux de trafic de la fréquence balise libres pour l'émission de bursts de remplissage selon l'une des revendications 1 à 6.

## Patentansprüche

1. Füll-Burst-Struktur, eingesetzt in
einem zellularen digitalen Mobilfunknetz,
das nach dem Prinzip des Mehrfachzugriffs im Zeitmultiplex (TDMA für "Time Division Multiple Access) arbeitet, wobei jede Zelle dieses Systems einer Markerfrequenz zugeordnet ist, welche in regelmäßig wiederholte Frames (T') unterteilt ist;
und von denen jede mindestens einen Signalisierungskanal oder ein Markerband (ITO) für die Übertragung von Signalisierungsnachrichten (B_{S}) aufweist, die einen für Mobilstationen bestimmten Synchronisations-Burst enthalten;
wobei die anderen Kanäle (IT1, ... IT7) für die Übertragung von Nutzdaten (B_{T}) bestimmt sind,
wobei dieser Füll-Burst auf den Kanälen der Markerfrequenz gesendet wird, die nicht der Übertragung von Nutzdaten zugewiesen sind, **dadurch gekennzeichnet, dass**
der Füll-Burst (B_{RS}) enthält:
den Synchronisations-Burst,
welcher in mindestens einem der anderen Kanäle (IT2, IT3, IT6, IT7) wiederholt wird,
der nicht der Übertragung von Nutzdaten zugewiesen ist.

2. Füll-Burst-Struktur nach Anspruch 1,
**dadurch gekennzeichnet, dass**
der Füll-Burst (B_{RS}) einen Synchronisations-Burst enthält,
welcher in jedem der anderen Kanäle (IT2, IT3, IT6, IT7) wiederholt wird,
der nicht der Übertragung von Nutzdaten zugewiesen ist.

3. Füll-Burst-Struktur nach Anspruch 1 oder 2, **dadurch gekennzeichnet, dass** der Synchronisations-Burst Synchronisierungsinformationen für Mobilstationen enthält, die sich in oder in der Nähe einer Zelle befinden, welcher die Markerfrequenz zugewiesen ist, auf der er gesendet wird.

4. Füll-Burst-Struktur nach einem der Ansprüche 1 bis 3, **dadurch gekennzeichnet, dass** dieser Füll-Burst gleichzeitig den Synchronisations-Burst enthält, der für Mobilstationen bestimmt ist, die sich in oder in der Nähe einer Zelle befinden, welcher die Markerfrequenz zugewiesen ist, auf der er gesendet wird, sowie andere Signalisierungsinformationen.

5. Füll-Burst-Struktur nach einem der Ansprüche 3 oder 4, **dadurch gekennzeichnet, dass** der Synchronisations-Burst eine so genannte Lernsequenz aufweist, welche von der oder den Mobilstationen erkannt werden kann, für die sie bestimmt sind.

6. Füll-Burst-Struktur nach einem der Ansprüche 1 bis 5, **dadurch gekennzeichnet, dass** dann, wenn dieses System zur Übertragung der Signalisierungsnachrichten außer der Markerfrequenz, die als Haupt-Markerfrequenz bezeichnet wird, eine Hilfs-Markerfrequenz verwendet, die Füll-Bursts auf der Hilfs-Markerfrequenz dieselbe Struktur haben wie die Füll-Bursts, die auf der Haupt-Markerfrequenz verwendet werden.

7. Verfahren zur Übertragung von Signalisierungsnachrichten an eine oder mehrere Mobilstationen, die sich innerhalb der Reichweite von Zellen eines zellularen digitalen Mobilfunksystems entwickeln, das nach dem Prinzip des Mehrfachzugriffs im Zeitmultiplex arbeitet und in dem jede Zelle dieses Systems einer Markerfrequenz zugewiesen ist, welche in regelmäßig wiederholte Frames unterteilt ist und von denen jede mindestens einen Signalisierungskanal oder ein Markerband für die Übertragung von Signalisierungsnachrichten an Mobilstationen aufweist, wobei die anderen Kanäle für die Übertragung von Nutzdaten bestimmt sind,
**dadurch gekennzeichnet, dass** die auf dem Markerband gesendeten Signalisierungsnachrichten für die bereits synchronisierten Mobilstationen eine Information enthalten, die letzteren mitteilt, dass die Füll-Bursts, die auf den Kanälen dieser Markerfrequenz gesendet werden und die nicht der Übertragung von Nutzdaten zugewiesen sind, zu erfassende Signalisierungsdaten enthalten und eine Struktur nach einem der Ansprüche 1 bis 6 haben.

8. Verfahren zur Zuweisung eines Verkehrskanals in einem zellularen digitalen Mobilfunksystem, das nach dem Prinzip des Mehrfachzugriffs im Zeitmultiplex arbeitet und in dem jede Zelle dieses Systems einer Markerfrequenz zugewiesen ist, welche in regelmäßig wiederholte Frames unterteilt ist und von denen jede mindestens einen Signalisierungskanal oder ein Markerband für die Übertragung von Signalisierungsnachrichten an Mobilstationen aufweist, wobei die anderen Kanäle, die so genannten Verkehrskanäle zur Übertragung von Nutzdaten bestimmt sind, wobei ein Füll-Burst auf den Kanälen der Markerfrequenz gesendet wird, die nicht der Übertragung von Nutzdaten zugewiesen sind,
**dadurch gekennzeichnet, dass** es dann, wenn andere Frequenzen als die Markerfrequenz für den Verkehr verfügbar sind, darin besteht, an erster Stelle Verkehrskanäle auf diesen Frequenzen in der Weise zuzuweisen, dass die Verkehrskanäle der Markerfrequenz für das Senden von Füll-Bursts nach einem der Ansprüche 1 bis 6 frei bleiben.

9. Basisstation (BTS1) eines zellularen digitalen Mobilfunksystem, das nach dem Prinzip des Mehrfachzugriffs im Zeitmultiplex arbeitet, wobei diese Station insbesondere Sende- und Empfangsvorrichtungen (E/R) und eine Steuervorrichtung (L) umfasst, **dadurch gekennzeichnet, dass** diese Steuervorrichtung (L) als Antwort auf einen von den Vorrichtungen zur Funkressourcenverwaltung (GRR) dieses Systems erhaltenen Befehl, der mitteilt, welche der Verkehrskanäle dieser Markerfrequenz nicht zum Übertragen von Nutzdaten genutzt werden und welche der Zeitintervalle dieses Signalisierungskanals nicht zum Übertragen von Signalisierungsnachrichten verwendet werden, Erzeugungsvorrichtungen (E) von Bursts steuert, welche eine Struktur nach einem der Ansprüche 1 bis 5 haben, wobei diese Füll-Bursts von den Sende-/Empfangsvorrichtungen (E/R) während der Zeitintervalle gesendet werden, welche den Kanälen der Markerfrequenz entsprechen, die nicht der Übertragung von Nutzdaten zugewiesen sind.

10. Basisstation nach Anspruch 9, **dadurch gekennzeichnet, dass** die Steuervorrichtung so konzipiert ist, dass sie den Sendevorgang von Füll-Burts steuert, deren Inhalt von den nicht für die Übertragung genutzten Verkehrskanälen abhängt.

11. Basisstation nach einem der Ansprüche 9 oder 10, **dadurch gekennzeichnet, dass** die Steuervorrichtung so konzipiert ist, dass sie den Sendevorgang von Signalisierungsnachrichten über die Sende-/Empfangsvorrichtungen auf dem Markerkanal steuert, wobei die Signalisierungsnachrichten eine Information enthalten, die den bereits synchronisierten Mobilstationen mitteilt, welche Verkehrskanäle zum Übertragen dieser Füll-Bursts genutzt werden, die ebenfalls Signalisierungsnachrichten enthalten können.

12. Organ zur Verwaltung von Funkressourcen für ein zellulares digitales Mobilfunksystem, das nach dem Prinzip des Mehrfachzugriffs im Zeitmultiplex (TDMA) arbeitet, ein System, in dem jeder Zelle eine in regelmäßig wiederholte Frames unterteilte Markerfrequenz zugewiesen ist und von denen jede mindestens einen Signalisierungskanal oder ein Markerband für die Übertragung von Signalisierungsnachrichten an Mobilstationen aufweist, wobei die anderen Kanäle, die so genannten Verkehrskanäle, zur Übertragung von Nutzdaten bestimmt sind, wobei ein Füll-Burst auf den Kanälen der Markerfrequenz gesendet wird, die nicht für die Übertragung von Nutzdaten zugewiesen sind,
**dadurch gekennzeichnet, dass** dieses Organ zur Verwaltung der Funkressourcen Vorrichtungen aufweist, um festzustellen, ob andere Frequenzen als die Markerfrequenz für den Verkehr zur Verfügung stehen, und um an erster Stelle Verkehrskanäle auf diesen Frequenzen in der Weise zuzuweisen, dass die Verkehrskanäle der Markerfrequenz für das Senden von Füll-Bursts nach einem der Ansprüche 1 bis 6 frei bleiben.

## Claims

1. Filler burst structure used in a digital radiocommunications cellular system operating along the principle of Time Division Multiple Access (TDMA), each cell in this system being associated with a beacon frequency subdivided into frames (T') repeated periodically, and each comprising at least one signalling channel or beacon path (ITO) for the transmission of signalling messages (B_{S}) containing a synchronization burst intended for mobile stations, the other channels (IT1, ...IT7) being intended for the transmission of user data (B_{T}) said filler burst being transmitted on the channels of said beacon frequency which are not allocated to the transmission of user data, **characterized in that** said filler burst (B_{RS}) contains said synchronisation burst which is repeated in at least one of said other channels (IT2, IT3, IT6, IT7) which is not allocated to the transmission of user data.

2. Filler burst structure as in claim 1, **characterized in that** each filler burst (B_{RS}) contains a synchronisation burst which is repeated in each of said other channels (IT2, IT3, IT6, IT7) which is not allocated to the transmission of user data.

3. Filler burst structure as in claim 1 or 2, **characterized in that** said synchronization burst contains synchronization data intended for mobile stations located in or in the vicinity of a cell with which the beacon frequency, on which it is transmitted, is associated.

4. Filler burst structure as in any of claims 1 to 3, **characterized in that** said filler burst contains both said synchronization burst intended for mobile stations located in or in the vicinity of a cell with which the beacon frequency on which it is transmitted is associated, and other signalling information.

5. Filler burst structure as in either of claims 3 or 4, **characterized in that** said synchronization burst comprises a so-called training sequence recognizable by the mobile station or stations for which it is intended.

6. Filler burst structure as in any of claims 1 to 5, **characterized in that** when said system for the transmission of said signalling messages, in addition to said beacon frequency called main beacon frequency, uses an auxiliary beacon frequency, the filler bursts on said auxiliary beacon frequency have the same structure as the filler bursts used on said main beacon frequency.

7. Method for transmitting signalling messages to one or more mobile stations operating under the cover of cells in a digital radiocommunications cellular system operating along the principle of Time Division Multiple Access, each cell of this system being associated with a beacon frequency subdivided into periodically repeated frames and each comprising at least one signalling channel or beacon path for the transmission of signalling messages to mobile stations, the other channels being intended for the transmission of user data, **characterized in that** the signalling messages transmitted on the beacon path comprise an information intended for mobile station or stations that are already synchronized indicating to the latter that the filler bursts transmitted on the channels of said beacon frequency which are not allocated to the transmission of user data contain signalling data to be acquired and have a structure as in any of claims 1 to 6.

8. Method for allocating a traffic channel in a digital radiocommunications cellular system operating along the principle of Time Division Multiple Access (TDMA), each cell in this system being associated with a beacon frequency subdivided into periodically repeated frames and each comprising at least one signalling channel or beacon path for the transmission of signalling messages to mobile stations, the other so-called traffic channels being intended for the transmission of user data, a filler burst being transmitted on the channels of the beacon frequency which are not allocated to the transmission of user data,
**characterized in that**, when frequencies other than the beacon frequency are available for traffic, it consists of firstly assigning traffic channels to these frequencies so as to leave free the traffic channels of the beacon frequency for the transmission of filler bursts as in any of claims 1 to 6.

9. Base station (BTS1) of a digital radiocommunications cellular system operating along the principle of Time Division Multiple Access, comprising in particular transmitting and receiving means (E/R) and piloting means (L) **characterized in that**, in response to an order received from radio resource management means (GRR) of said system indicating which traffic channels of said beacon frequency are unused for transmitting user data and which time intervals of said signalling channel are unused for transmitting signalling messages, said piloting means (L) commands means to produce bursts (E) having a structure as in any of claims 1 to 5, these filler bursts being transmitted by said transmitting/receiving means (E/R) during time intervals corresponding to the channels of said beacon frequency which are not allocated to the transmission of user data.

10. Base station as in claim 9, **characterized in that** said piloting means is designed to control the transmission of filler bursts whose content depends on unused traffic channels for the transmission of user data.

11. Base station as in either of claims 9 or 10, **characterized in that** said piloting means is designed to control the transmission by said transmitting/receiving means, on said beacon path, of signalling messages comprising data indicating to mobile stations that are already synchronized which traffic channels are used to transmit said filler bursts which may also contain signalling messages.

12. Radio resource management member for a digital radiocommunications cellular system operating along the principle of Time Division Multiple Access, a system in which each cell is associated with a beacon frequency subdivided into periodically repeated frames and each comprising at least one signalling channel or beacon path for the transmission of signalling messages to mobile stations, the other so-called traffic channels being intended for the transmission of user data, a filler burst being transmitted on the channels of the beacon frequency which are not allocated to the transmission of user data,
**characterized in that** said radio resource management member comprises means for determining whether frequencies other than the beacon frequency are available for traffic, and for allocating traffic channels firstly to these frequencies so as to leave free the traffic channels of the beacon frequency for the transmission of filler bursts as in any of claims 1 to 6.
